# EUROPÄISCHE PATENTSCHRIFT

(11) **EP 3 762 627 B1**
(45) Veröffentlichungstag und Bekanntmachung des Hinweises auf die Patenterteilung: **06.04.2022**
(21) Anmeldenummer: 19712505.7
(22) Anmeldetag: 28.02.2019
(51) Int. Cl.: F16D 23/12, F16D 13/64, F16F 15/14, F16D 13/08

(54) **REIBUNGSKUPPLUNG MIT FLIEHKRAFTPENDEL UND VERFAHREN ZUR SCHALTBAREN VERBINDUNG EINES FLIEHKRAFTPENDELS MIT EINER NABE EINER REIBUNGSKUPPLUNG**
FRICTION CLUTCH COMPRISING A CENTRIFUGAL PENDULUM-TYPE ABSORBER AND METHOD FOR THE SWITCHABLE CONNECTION OF A CENTRIFUGAL PENDULUM-TYPE ABSORBER TO A HUB OF A FRICTION CLUTCH
EMBRAYAGE À FRICTION COMPRENANT UN PENDULE CENTRIFUGE ET PROCÉDÉ POUR ÉTABLIR UNE LIAISON COMMUTABLE D'UN PENDULE CENTRIFUGE À UN MOYEU D'UN EMBRAYAGE À FRICTION

(30) Priorität: 06.03.2018 DE 102018105071
(43) Veröffentlichungstag der Anmeldung: 13.01.2021
(73) Patentinhaber: Schaeffler Technologies AG & Co. KG, 91074 Herzogenaurach (DE)
(72) Erfinder: DANNHÄUSER, Matthias, 75239 Eisingen (DE); VOGEL, Florian, 77815 Bühl (DE)
(86) Internationale Anmeldenummer: PCT/DE2019/100180
(87) Internationale Veröffentlichungsnummer: WO 2019/170190

(56) Entgegenhaltungen:
- DE-A1-102013 221 537
- DE-A1-102014 208 563
- FR-A1- 3 052 514
- US-A1- 2018 347 676

## Beschreibung

Die vorliegende Erfindung betrifft eine Reibungskupplung mit einem Fliehkraftpendel, einer Nabe und einer gemeinsamen Drehachse. Die Reibungskupplung ist insbesondere in einem Kraftfahrzeug einsetzbar, bevorzugt im Antriebsstrang eines Kraftfahrzeugs. Das Fliehkraftpendel ist insbesondere für eine Reduzierung von motorerregten Torsionsschwingungen vorgesehen. Das Fliehkraftpendel umfasst zumindest einen Flansch (als Schwungmasse) und eine Mehrzahl von Pendelmassen, die beweglich an dem Flansch angeordnet sind.

Eine Reibungskupplung umfasst regelmäßig zumindest eine Gegenplatte, eine gegenüber der Gegenplatte entlang einer axialen Richtung verlagerbare Anpressplatte und eine zwischen Gegenplatte und Anpressplatte anordenbare Kupplungsscheibe. Beim Einrücken der Reibungskupplung wird die Kupplungsscheibe mit Gegenplatte und Anpressplatte reibschlüssig verbunden, so dass ein Drehmoment z. B. von einer Verbrennungskraftmaschine über die Gegenplatte und Anpressplatte auf die Kupplungsscheibe und von der Kupplungsscheibe auf eine Nabe übertragbar ist. Beim Ausrücken der Reibungskupplung wird die reibschlüssige Verbindung gelöst. Die Nabe ist insbesondere mit einer Getriebeeingangswelle drehfest verbunden.

Ein Fliehkraftpendel wird insbesondere bei Reibungskupplungen eingesetzt, um die Übertragung von unerwünschten Schwingungen, in der Regel ausgehend von der Verbrennungskraftmaschine auf das angetriebene System, zumindest in vorbestimmten Frequenzbereichen zu unterdrücken. Die Pendelmassen können im Feld der Zentrifugalbeschleunigung Schwingungen entlang ihrer Laufbahnen ausführen, wenn sie von Momentenschwankungen einer Verbrennungskraftmaschine angeregt werden. Durch diese Schwingungen wird der Erregerschwingung zu passenden Zeiten Energie entzogen und wieder zugeführt, so dass es zu einer Beruhigung der Erregerschwingung kommt, wobei das Fliehkraftpendel dabei als Tilger wirkt. Da sowohl die Eigenfrequenz der Fliehkraftpendelschwingung als auch die Erregerfrequenz proportional zur Drehzahl sind, kann die Tilgerwirkung eines Fliehkraftpendels insbesondere über den ganzen Frequenzbereich erzielt werden.

Aus der DE 10 2013 214 829 A1 ist ein Fliehkraftpendel bekannt, bei dem die Pendelmassen gegenüber der Schwungscheibe über Rollen (Rollenkörper) beweglich gelagert sind. Diese Rollen sind dazu eingerichtet, zwischen einer Pendelmasse und der Lagerfläche (Anschlag) einer Schwungscheibe des Fliehkraftpendels angeordnet zu werden, so dass die Pendelmasse infolge einer eingehenden Vibration eine vordefinierte Tilgungsbewegung ausführen kann. Dabei rollt die Pendelmasse über den Rollabschnitt der Rolle ab. Über die Rolle ist die zumindest eine Pendelmasse beweglich an der Schwungscheibe so fixiert, dass sie in einer axialen Richtung gesichert ist und in der Ebene normal zur Schwingachse entlang einer vorbestimmten Kurve schwingen kann. Die Schwungachse ist dabei die Drehachse der Reibungskupplung, so dass die Schwungscheibe um die Drehachse der Reibkupplung rotiert.

Bei dem Öffnen der Reibungskupplung wirkt ein hohes Massenträgheitsmoment des Fliehkraftpendels nachteilig. Das Fliehkraftpendel sollte daher eigentlich nur im geschlossenen (eingerückten) Zustand der Reibungskupplung mit einer Getriebeeingangswelle verbunden sein. Für ein Lösen von Fliehkraftpendel und Getriebeeingangswelle wären aber hohe Betätigungskräfte notwendig, da beide Bauteile stark momentenfest verbunden sein müssen.

Aus der DE 10 2013 221 537 A1 ist eine Reibungskupplung mit Fliehkraftpendel bekannt, die auf den Oberbegriff des Anspruchs 1 lesbar ist.

Der vorliegenden Erfindung liegt die Aufgabe zugrunde, die aus dem Stand der Technik bekannten Probleme zumindest teilweise zu lösen. Insbesondere soll eine Reibungskupplung mit Fliehkraftpendel vorgeschlagen werden, wobei die Entkopplung im vorhandenen Bauraum kostengünstig und insbesondere mit möglichst niedrigen Betätigungskräften umgesetzt werden kann.

Diese Aufgabe wird gelöst mit einer Reibungskupplung gemäß den Merkmalen des unabhängigen Anspruchs 1. Weitere vorteilhafte Ausgestaltungen der Erfindung sind in den abhängig formulierten Ansprüchen angegeben.

Darüber hinaus werden die in den Ansprüchen angegebenen Merkmale in der Beschreibung näher präzisiert und erläutert, wobei weitere bevorzugte Ausgestaltungen der Erfindung dargestellt werden.

Die Erfindung betrifft eine Reibungskupplung mit einem Fliehkraftpendel, einer Nabe und einer gemeinsamen Drehachse, wobei das Fliehkraftpendel zumindest mindestens einen Flansch und eine Mehrzahl von Pendelmassen aufweist, wobei die Pendelmassen zumindest entlang einer radialen Richtung gegenüber der Drehachse und gegenüber dem mindestens einen Flansch beweglich am mindestens einen Flansch angeordnet sind; wobei das Fliehkraftpendel schaltbar mit der Nabe drehfest verbindbar ist. Der mindestens eine Flansch und die Nabe sind über ein Schlingband drehfest verbindbar.

Eine Reibungskupplung umfasst insbesondere zumindest eine Gegenplatte, eine gegenüber der Gegenplatte entlang einer axialen Richtung verlagerbare Anpressplatte und eine zwischen Gegenplatte und Anpressplatte anordenbare Kupplungsscheibe. Beim Einrücken der Reibungskupplung wird die Kupplungsscheibe mit Gegenplatte und Anpressplatte reibschlüssig verbunden, so dass ein Drehmoment z. B. von einer Verbrennungskraftmaschine über die Gegenplatte und Anpressplatte auf die Kupplungsscheibe und von der Kupplungsscheibe auf eine Nabe übertragbar ist. Beim Ausrücken der Reibungskupplung wird die reibschlüssige Verbindung gelöst. Die Nabe ist insbesondere mit einer Getriebeeingangswelle drehfest verbunden oder bildet die Getriebeeingangswelle.

Ein Fliehkraftpendel wird insbesondere bei Reibungskupplungen eingesetzt, um die Übertragung von unerwünschten Schwingungen, in der Regel ausgehend von einer Verbrennungskraftmaschine auf das angetriebene System, zumindest in vorbestimmten Frequenzbereichen zu unterdrücken. Die Pendelmassen können im Feld der Zentrifugalbeschleunigung Schwingungen entlang ihrer Laufbahnen ausführen, wenn sie von Momentenschwankungen z. B. einer Verbrennungskraftmaschine angeregt werden. Durch diese Schwingungen wird der Erregerschwingung zu passenden Zeiten Energie entzogen und wieder zugeführt, so dass es zu einer Beruhigung der Erregerschwingung kommt, wobei das Fliehkraftpendel dabei als Tilger wirkt.

Insbesondere ist das Fliehkraftpendel in der radialen Richtung innen von Anpressplatte und Gegenplatte angeordnet.

Vorliegend wird vorgeschlagen, dass das Fliehkraftpendel entweder gegenüber der Nabe drehbar angeordnet oder mit der Nabe drehfest verbunden ist. Insbesondere ist das Fliehkraftpendel bei eingerückter Reibungskupplung mit der Nabe drehfest verbunden und bei ausgerückter Reibungskupplung gegenüber der Nabe drehbar angeordnet.

Ein Schlingband dient der Verbindung zweier insbesondere elastisch verformbarer Bauteile, hier Nabe und Flansch. Das Schlingband erstreckt sich z. B. entlang einer Umfangsrichtung um diese Bauteile. Wird das Schlingband gespannt, werden die Bauteile elastisch verformt und bilden eine kraftschlüssige Verbindung miteinander aus. Wird das Schlingband gelöst, kann die kraftschlüssige Verbindung infolge der elastischen Rückfederung der Bauteile aufgelöst werden.

Das Schlingband erstreckt sich zwischen einem ersten Ende und einem zweiten Ende entlang einer Umfangsrichtung um die Drehachse.

Bevorzugt ist das Schlingband mit einem ersten Ende an dem Flansch befestigt.

Insbesondere ist das Schlingband mit einem zweiten Ende an einer Hülse angebunden, wobei die Hülse gegenüber der Nabe verdrehbar ist.

Ein Betätigungshebel zur Betätigung der Hülse kann entlang einer axialen Richtung verlagerbar sein, wobei durch eine Verlagerung des Betätigungshebels die Hülse in einer Umfangsrichtung verdrehbar ist.

Insbesondere ist der Betätigungshebel mit dem Flansch gegenüber der Umfangsrichtung drehfest verbunden. Wird der Betätigungshebel (z. B. über ein Betätigungselement der Reibungskupplung) entlang der axialen Richtung verlagert, wird die Hülse in der Umfangsrichtung gegenüber der Nabe und gegenüber dem Flansch verdreht. Das mit der Hülse verbundene zweite Ende des Schlingbandes wird also gegenüber dem Flansch und dem ersten Ende in der Umfangsrichtung verlagert und dabei gelöst. Insbesondere wird so eine kraftschlüssige Verbindung zwischen Flansch und Nabe gelöst, so dass das Fliehkraftpendel mit der Nabe nicht mehr drehfest verbunden ist.

Insbesondere wirkt der Betätigungshebel mit der Hülse über ein Rampensystem zusammen.

Dabei kann der Betätigungshebel eine Rampe aufweisen, die eine gegenüber einer Umfangsrichtung geneigte Oberfläche aufweist. Insbesondere kann (zusätzlich) die Hülse eine Rampe aufweisen, die eine gegenüber der Umfangsrichtung geneigte Oberfläche aufweist. Bei einer Verlagerung des Betätigungshebels entlang der axialen Richtung kann die Rampe bzw. können die Rampen zusammenwirken zur Verlagerung der Hülse entlang der Umfangsrichtung.

Insbesondere liegt eine kraftschlüssige Verbindung zwischen der Nabe und dem Fliehkraftpendel in einer radialen Richtung innerhalb des Schlingbandes vorliegt.

Gemäß einer anderen Ausgestaltung liegt eine kraftschlüssige Verbindung zwischen der Nabe und dem Fliehkraftpendel in einer radialen Richtung außerhalb des Schlingbandes vor.

Der Betätigungshebel kann mit einem Betätigungselement (z. B. einer Tellerfeder oder einem CSC-Betätigungssystem (Concentric Slave Cylinder)) für die Reibungskupplung zusammenwirken, über das die Reibungskupplung ein- und/oder ausrückbar ist (also die Anpressplatte entlang der axialen Richtung verlagerbar ist).

Insbesondere sind der mindestens eine Flansch und die Nabe durch einen Betätigungshebel (durch dessen Verlagerung entlang der axialen Richtung) drehfest verbindbar und die Reibungskupplung weist ein Betätigungselement zur Betätigung der Reibungskupplung auf. Der Betätigungshebel und das Betätigungselement sind so angeordnet, dass bei Betätigung des Betätigungselements zunächst die drehfeste Verbindung von Fliehkraftpendel und Nabe erzeugbar oder lösbar ist und danach die Betätigung der Reibungskupplung erfolgt. Es ist aber auch möglich, dass die Betätigung der Reibungskupplung und die Erzeugung bzw. das Lösen der drehfesten Verbindung von Fliehkraftpendel und Nabe gleichzeitig erfolgt.

Es wird weiter ein Verfahren , das nicht Teil der Erfindung ist, zur schaltbaren Verbindung eines Fliehkraftpendels mit einer Nabe einer Reibungskupplung vorgeschlagen, wobei die Reibungskupplung zumindest das Fliehkraftpendel, eine Nabe und eine gemeinsame Drehachse aufweist, wobei das Fliehkraftpendel zumindest mindestens einen Flansch und eine Mehrzahl von Pendelmassen aufweist, wobei die Pendelmassen zumindest entlang einer radialen Richtung gegenüber der Drehachse und gegenüber dem mindestens einen Flansch beweglich am mindestens einen Flansch angeordnet sind; wobei das Fliehkraftpendel schaltbar mit der Nabe drehfest verbindbar ist. Der mindestens eine Flansch und die Nabe sind über ein Schlingband drehfest verbindbar.

Insbesondere ist das Verfahren auf die bereits beschriebene Reibungskupplung anwendbar.

Insbesondere erfolgen bei einer Betätigung der Reibungskupplung über ein Betätigungselement die folgenden Schritte:
a) Erzeugen oder lösen der drehfesten Verbindung von Fliehkraftpendel und Nabe und danach oder gegebenenfalls gleichzeitig
b) Betätigen der Reibungskupplung.

Die Ausführungen zu der Reibungskupplung gelten gleichermaßen für das Verfahren und umgekehrt.

Insbesondere sind der Betätigungshebel und das Betätigungselement der Reibungskupplung so angeordnet, dass bei Betätigung des Betätigungselements zunächst die drehfeste Verbindung von Fliehkraftpendel und Nabe erzeugt oder gelöst wird und danach die Reibungskupplung betätigt wird, also die reibschlüssige Verbindung der Kupplungsscheibe mit Anpressplatte und Gegenplatte gebildet bzw. aufgelöst wird. Es ist auch möglich, dass die Betätigung der Reibungskupplung und die Erzeugung bzw. das Lösen der drehfesten Verbindung von Fliehkraftpendel und Nabe gleichzeitig erfolgt

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Reibungskupplung mit einem Fliehkraftpendel in einer Seitenansicht im Schnitt; und
- Fig. 2:: das Rampensystem in einer Ansicht entlang der radialen Richtung.

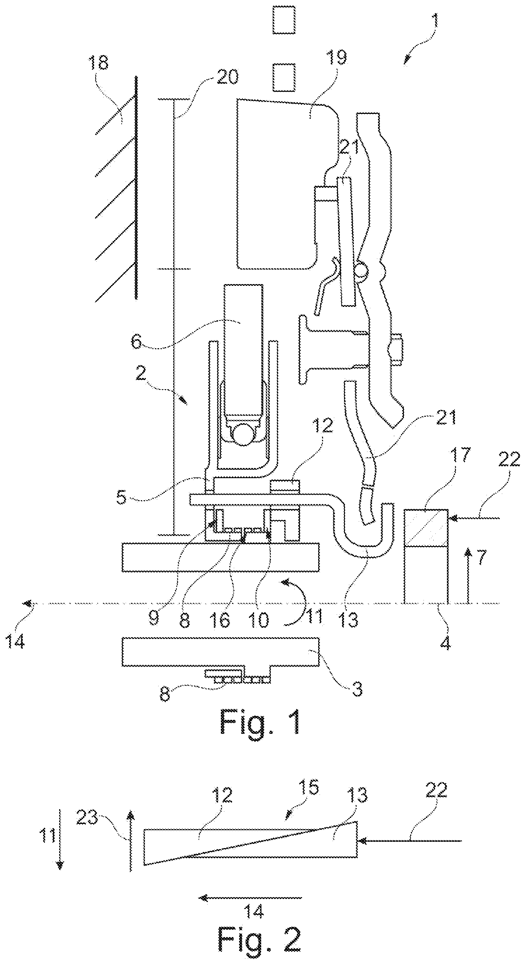

Fig. 1 zeigt eine Reibungskupplung 1 mit einem Fliehkraftpendel 2 in einer Seitenansicht im Schnitt. Die Reibungskupplung 1 umfasst weiter eine Nabe 3 und eine gemeinsame Drehachse 4, wobei das Fliehkraftpendel 2 einen Flansch 5 und eine Mehrzahl von Pendelmassen 6 aufweist. Die Pendelmassen 6 sind entlang einer radialen Richtung 7 gegenüber der Drehachse 4 und gegenüber dem Flansch 5 beweglich am Flansch 5 angeordnet. Das Fliehkraftpendel 2 ist schaltbar mit der Nabe 3 drehfest verbindbar.

Die Reibungskupplung 1 umfasst eine Gegenplatte 18, eine gegenüber der Gegenplatte 18 entlang einer axialen Richtung 14 verlagerbare Anpressplatte 19 und eine zwischen Gegenplatte 18 und Anpressplatte 19 angeordnete Kupplungsscheibe 20. Beim Einrücken der Reibungskupplung 1 wird die Kupplungsscheibe 20 mit Gegenplatte 18 und Anpressplatte 19 reibschlüssig verbunden, so dass ein Drehmoment z. B. von einer Verbrennungskraftmaschine über die Gegenplatte 18 und Anpressplatte 19 auf die Kupplungsscheibe 20 und von der Kupplungsscheibe 20 auf die Nabe 3 übertragbar ist. Beim Ausrücken der Reibungskupplung 1 wird die reibschlüssige Verbindung gelöst. Die Nabe 3 ist mit einer Getriebeeingangswelle drehfest verbunden oder bildet die Getriebeeingangswelle.

Das Fliehkraftpendel 2 ist in der radialen Richtung 7 innen von Anpressplatte 19 und Gegenplatte 18 angeordnet.

Vorliegend wird vorgeschlagen, dass das Fliehkraftpendel 2 entweder gegenüber der Nabe 3 drehbar angeordnet oder mit der Nabe 3 drehfest verbunden ist. Der Flansch 5 und die Nabe 3 sind über ein Schlingband 8 drehfest verbindbar.

Ein Schlingband 8 dient der Verbindung zweier elastisch verformbarer Bauteile, hier Nabe 3 und Flansch 5. Das Schlingband 8 erstreckt sich entlang einer Umfangsrichtung 11 um diese Bauteile. Wird das Schlingband 8 gespannt, werden die Bauteile elastisch verformt und bilden eine kraftschlüssige Verbindung 16 miteinander aus.

Wird das Schlingband 8 gelöst, kann die kraftschlüssige Verbindung 16 infolge der elastischen Rückfederung der Bauteile aufgelöst werden.

Das Schlingband 8 erstreckt sich zwischen einem ersten Ende 9 und einem zweiten Ende 10 entlang der Umfangsrichtung 11 um die Drehachse 4. Das Schlingband 8 ist mit dem ersten Ende 9 an dem Flansch 5 befestigt. Das Schlingband 8 ist mit einem zweiten Ende 10 an einer Hülse 12 angebunden, wobei die Hülse 12 gegenüber der Nabe 3 verdrehbar ist. Ein Betätigungshebel 13 zur Betätigung der Hülse 12 ist entlang einer axialen Richtung 14 verlagerbar, wobei durch eine Verlagerung des Betätigungshebels 13 die Hülse 12 in einer Umfangsrichtung 11 verdrehbar ist.

Der Betätigungshebel 13 ist mit dem Flansch 5 gegenüber der Umfangsrichtung 11 drehfest verbunden. Wird der Betätigungshebel 13 (z. B. über das Betätigungselement 17 der Reibungskupplung 1) entlang der axialen Richtung 14 verlagert, wird die Hülse 12 in der Umfangsrichtung 11 gegenüber der Nabe 3 und gegenüber dem Flansch 5 verdreht. Das mit der Hülse 12 verbundene zweite Ende 10 des Schlingbandes 8 wird also gegenüber dem Flansch 5 und dem ersten Ende 9 in der Umfangsrichtung 11 verlagert und dabei gelöst. So wird eine kraftschlüssige Verbindung 16 zwischen Flansch 5 und Nabe 3 gelöst, so dass das Fliehkraftpendel 2 mit der Nabe 3 nicht mehr drehfest verbunden ist.

Der Betätigungshebel 13 wirkt mit der Hülse 12 über ein Rampensystem 15 zusammen. Dabei weist der Betätigungshebel 13 eine Rampe auf, die eine gegenüber einer Umfangsrichtung 11 geneigte Oberfläche aufweist. Zusätzlich weist die Hülse 12 eine Rampe auf, die eine gegenüber der Umfangsrichtung 11 geneigte Oberfläche aufweist. Bei einer Verlagerung des Betätigungshebels 13 entlang der axialen Richtung 14 können die Rampen zusammenwirken zur Verlagerung der Hülse 12 entlang der Umfangsrichtung 11.

Die kraftschlüssige Verbindung 16 zwischen der Nabe 3 und dem Fliehkraftpendel 2 in liegt in einer radialen Richtung 7 innerhalb des Schlingbandes 8 vor.

Der Betätigungshebel 13 wirkt mit einem Betätigungselement 17 eines CSC-Betätigungssystems (Concentric Slave Cylinder)) für die Reibungskupplung 1 zusammen, über das eine Tellerfeder 21 der Reibungskupplung 1 betätigbar und damit die Reibungskupplung 1 ein- und/oder ausrückbar ist (also die Anpressplatte 19 entlang der axialen Richtung 14 verlagerbar ist).

Betätigungshebel 13 und Betätigungselement 17 bzw. Tellerfeder 21 sind so angeordnet, dass bei Betätigung des Betätigungselements 17 zunächst die drehfeste Verbindung von Fliehkraftpendel 2 und Nabe 3 erzeugbar oder lösbar ist und danach die Betätigung der Reibungskupplung 1 erfolgt.

Fig. 2 zeigt das Rampensystem 15 in einer Ansicht entlang der radialen Richtung 7. Der Betätigungshebel 13 weist eine Rampe auf, die eine gegenüber einer Umfangsrichtung 11 geneigte Oberfläche aufweist. Zusätzlich weist die Hülse 12 eine Rampe auf, die eine gegenüber der Umfangsrichtung 11 geneigte Oberfläche aufweist. Bei einer Verlagerung des Betätigungshebels 13 entlang der axialen Richtung 14 infolge der Betätigungskraft 22 können die Rampen zusammenwirken zur Verlagerung der Hülse 12 um einen Weg 23 entlang der Umfangsrichtung 11.

### Bezugszeichenliste

- 1: Reibungskupplung
- 2: Fliehkraftpendel
- 3: Nabe
- 4: Drehachse
- 5: Flansch
- 6: Pendelmasse
- 7: radiale Richtung
- 8: Schlingband
- 9: erstes Ende
- 10: zweites Ende
- 11: Umfangsrichtung
- 12: Hülse
- 13: Betätigungshebel
- 14: axiale Richtung
- 15: Rampensystem
- 16: Verbindung
- 17: Betätigungselement
- 18: Gegenplatte
- 19: Anpressplatte
- 20: Kupplungsscheibe
- 21: Tellerfeder
- 22: Betätigungskraft
- 23: Weg

## Patentansprüche

1. Reibungskupplung (1) mit einem Fliehkraftpendel (2), einer Nabe (3) und einer gemeinsamen Drehachse (4), wobei das Fliehkraftpendel (2) zumindest mindestens einen Flansch (5) und eine Mehrzahl von Pendelmassen (6) aufweist, wobei die Pendelmassen (6) zumindest entlang einer radialen Richtung (7) gegenüber der Drehachse (4) und gegenüber dem mindestens einen Flansch (5) beweglich am mindestens einen Flansch (5) angeordnet sind; wobei das Fliehkraftpendel (2) schaltbar mit der Nabe (3) drehfest verbindbar ist; wobei der mindestens eine Flansch (5) und die Nabe (3) über ein Schlingband (8) drehfest verbindbar sind, **dadurch gekennzeichnet, dass** sich das Schlingband (8) zwischen einem ersten Ende (9) und einem zweiten Ende (10) entlang einer Umfangsrichtung (11) um die Drehachse (4) erstreckt.

2. Reibungskupplung (1) nach Anspruch 1, wobei das Schlingband (8) mit einem ersten Ende (9) an dem Flansch (5) befestigt ist.

3. Reibungskupplung (1) nach einem der vorhergehenden Ansprüche, wobei das Schlingband (8) mit einem zweiten Ende (10) an einer Hülse (12) angebunden ist, wobei die Hülse (12) gegenüber der Nabe (3) verdrehbar ist.

4. Reibungskupplung (1) nach Anspruch 3, wobei ein Betätigungshebel (13) zur Betätigung der Hülse (8) entlang einer axialen Richtung (14) verlagerbar ist, wobei durch eine Verlagerung des Betätigungshebels (13) die Hülse (12) in einer Umfangsrichtung (11) verdrehbar ist.

5. Reibungskupplung (1) nach einem der vorhergehenden Ansprüche 3 und 4, wobei der Betätigungshebel (13) mit der Hülse (12) über ein Rampensystem (15) zusammenwirkt.

6. Reibungskupplung (1) nach einem der vorhergehenden Ansprüche, wobei eine kraftschlüssige Verbindung (16) zwischen der Nabe (3) und dem Fliehkraftpendel (2) in einer radialen Richtung (7) innerhalb des Schlingbandes (8) vorliegt.

7. Reibungskupplung (1) nach einem der vorhergehenden Ansprüche, wobei eine kraftschlüssige Verbindung (16) zwischen der Nabe (3) und dem Fliehkraftpendel (2) in einer radialen Richtung (7) außerhalb des Schlingbandes (8) vorliegt.

8. Reibungskupplung (1) nach einem der vorhergehenden Ansprüche, wobei der mindestens eine Flansch (5) und die Nabe (3) durch einen Betätigungshebel (13) drehfest verbindbar sind und die Reibungskupplung (1) ein Betätigungselement (17) zur Betätigung der Reibungskupplung (1) aufweist, wobei der Betätigungshebel (13) und das Betätigungselement (17) so angeordnet sind, dass bei Betätigung des Betätigungselements (17) zunächst die drehfeste Verbindung von Fliehkraftpendel (2) und Nabe (3) erzeugbar oder lösbar ist und danach die Betätigung der Reibungskupplung (1) erfolgt.

## Claims

1. A friction clutch (1) having a centrifugal pendulum-type absorber (2), a hub (3) and a common axis of rotation (4), wherein the centrifugal pendulum-type absorber (2) has at least one flange (5) and a plurality of pendulum masses (6), wherein the pendulum masses (6) are arranged on the at least one flange (5) such that they move at least in a radial direction (7) in relation to the axis of rotation (4) and in relation to the at least one flange (5); wherein the centrifugal pendulum-type absorber (2) can be non-rotatably connected to the hub (3) in a switchable manner; wherein the at least one flange (5) and the hub (3) can be non-rotatably connected by a wrap-around band (8), **characterised in that** the wrap-around band (8) extends between a first end (9) and a second end (10) in a circumferential direction (11) around the axis of rotation (4).

2. The friction clutch (1) according to claim 1, wherein the wrap-around band (8) is fastened with a first end (9) to the flange (5).

3. The friction clutch (1) according to one of the preceding claims, wherein the wrap-around band (8) is connected with a second end (10) to a sleeve (12), wherein the sleeve (12) is rotatable relative to the hub (3).

4. The friction clutch (1) according to claim 3, wherein an actuating lever (13) for actuating the sleeve (8) can be moved in an axial direction (14), wherein the sleeve (12) can be rotated in a circumferential direction (11) through a movement of the actuating lever (13).

5. The friction clutch (1) according to one of the preceding claims 3 and 4, wherein the actuating lever (13) interacts with the sleeve (12) by means of a ramp system (15).

6. The friction clutch (1) according to one of the preceding claims, wherein a force-fitting connection (16) is present between the hub (3) and the centrifugal pendulum-type absorber (2) in a radial direction (7) inside the wrap-around band (8).

7. The friction clutch (1) according to one of the preceding claims, wherein a force-fitting connection (16) is present between the hub (3) and the centrifugal pendulum-type absorber (2) in a radial direction (7) outside the wrap-around band (8).

8. The friction clutch (1) according to one of the preceding claims, wherein the at least one flange (5) and the hub (3) can be non-rotatably connected by an actuating lever (13) and the friction clutch (1) has an actuating element (17) for actuating the friction clutch (1), wherein the actuating lever (13) and the actuating element (17) are arranged such that, when the actuating element (17) is actuated, the non-rotatable connection of centrifugal pendulum-type absorber (2) and hub (3) can be produced or released initially and then the friction clutch (1) is actuated.

## Revendications

1. Embrayage à friction (1) comprenant un pendule centrifuge (2), un moyeu (3) et un axe de rotation commun (4), dans lequel le pendule centrifuge (2) présente au moins une bride (5) et une pluralité de masses pendulaires (6), les masses pendulaires (6) étant disposées sur au moins ladite bride (5) de manière à être mobiles au moins dans une direction radiale (7) par rapport à l'axe de rotation (4) et par rapport à au moins ladite bride (5) ; le pendule centrifuge (2) pouvant être assemblé de manière commutable et solidaire en rotation au moyeu (3) ; au moins ladite bride (5) et le moyeu (3) pouvant être assemblés de manière solidaire en rotation par l'intermédiaire d'une bande en boucle (8), **caractérisé en ce que** la bande en boucle (8) s'étend entre une première extrémité (9) et une seconde extrémité (10) dans une direction circonférentielle (11) autour de l'axe de rotation (4).

2. Embrayage à friction (1) selon la revendication 1, dans lequel la bande en boucle (8) est fixée sur la bride (5) par une première extrémité (9).

3. Embrayage à friction (1) selon l'une quelconque des revendications précédentes, dans lequel la bande en boucle (8) est reliée par une seconde extrémité (10) à un manchon (12), le manchon (12) pouvant tourner par rapport au moyeu (3).

4. Embrayage à friction (1) selon la revendication 3, dans lequel un levier d'actionnement (13) destiné à actionner le manchon (8) peut être déplacé dans une direction axiale (14), le manchon (12) pouvant tourner dans une direction circonférentielle (11) par un déplacement du levier d'actionnement (13).

5. Embrayage à friction (1) selon l'une quelconque des revendications précédentes 3 et 4, dans lequel le levier d'actionnement (13) coopère avec le manchon (12) par l'intermédiaire d'un système de rampe (15).

6. Embrayage à friction (1) selon l'une quelconque des revendications précédentes, dans lequel il existe une liaison à force (16) entre le moyeu (3) et le pendule centrifuge (2) dans une direction radiale (7) à l'intérieur de la bande en boucle (8).

7. Embrayage à friction (1) selon l'une quelconque des revendications précédentes, dans lequel il existe une liaison à force (16) entre le moyeu (3) et le pendule centrifuge (2) dans une direction radiale (7) à l'extérieur de la bande en boucle (8).

8. Embrayage à friction (1) selon l'une quelconque des revendications précédentes, dans lequel au moins ladite bride (5) et le moyeu (3) peuvent être reliés de manière solidaire en rotation par un levier d'actionnement (13) et l'embrayage à friction (1) présente un élément d'actionnement (17) destiné à actionner l'embrayage à friction (1), le levier d'actionnement (13) et l'élément d'actionnement (17) étant disposés de telle sorte que, pendant l'actionnement de l'élément d'actionnement (17), la liaison solidaire en rotation du pendule centrifuge (2) et du moyeu (3) puisse d'abord être produite ou libérée et l'embrayage à friction (1) soit ensuite actionné.
